# NEUE EUROPÄISCHE PATENTSCHRIFT

(11) **EP 1 003 631 B2**
(45) Veröffentlichungstag und Bekanntmachung des Hinweises auf die Entscheidung über den Einspruch: **28.04.2004**
(45) Hinweis auf die Patenterteilung: 04.04.2001
(21) Anmeldenummer: 98951162.1
(22) Anmeldetag: 17.08.1998
(51) Int. Cl.: B26D 1/00

(54) **VORRICHTUNG ZUM PORTIONIEREN EINES FLEISCHSTÜCKS**
DEVICE FOR SLICING PIECES OF MEAT
DISPOSITIF PERMETTANT DE COUPER UN MORCEAU DE VIANDE EN PORTIONS

(30) Priorität: 15.08.1997 DE 19735597
(43) Veröffentlichungstag der Anmeldung: 31.05.2000
(73) Patentinhaber: Maja-Maschinenfabrik Hermann Schill GmbH, 77694 Kehl (DE)
(72) Erfinder: SCHILL, Joachim, D-77694 Kehl (DE); KRAUS, Werner, D-74564 Crailsheim (DE)
(74) Vertreter: Lucht, Silvia
(86) Internationale Anmeldenummer: PCT/DE1998/002396
(87) Internationale Veröffentlichungsnummer: WO 1999/008843

(56) Entgegenhaltungen:
- EP-A- 0 101 264
- EP-A- 0 306 012
- DE-A- 3 314 762
- DE-A- 3 540 904
- FR-A- 2 114 736
- GB-A- 2 000 678
- US-A- 2 101 755
- US-A- 3 733 652
- US-A- 5 051 268
- DATABASE WPI Section Ch, Week 8618 Derwent Publications Ltd., London, GB; Class D12, AN 86-116410(18) XP002092340 & JP 61 056893 A (NICHIREI KK) , 22. März 1986
- DATABASE WPI Section Ch, Week 8817 Derwent Publications Ltd., London, GB; Class D12, AN 88-117083(17) XP002092341 & JP 60 172494 A (NICHIREI KK) , 5. September 1985

## Beschreibung

### Stand der Technik

Die Erfindung geht aus von einer Vorrichtung zum Portionieren von Fleischstücken gemäß Oberbegriff des Patentanspruchs 1 nach der EP-A-0 306 012, Ausführungsformen der Abbildungen 5 bis 7.

Derartige Vorrichtungen kommen in Großküchen und bei der Herstellung von zusammengestellten und abgepackten Menüs zur Verwendung. Von einem großen Fleischstück werden einzelne Scheiben, insbesondere Schnellbratstücke, wie Schnitzel, Steaks oder Medaillons abgetrennt. Dabei kommt es darauf an, daß die einzelnen Fleischscheiben eine vorgegebene Dicke und ein vorgegebenes Gewicht aufweisen. Die Scheiben müssen möglichst exakt portioniert sein, damit sie in ihrer Garzeit übereinstimmen, die einzelnen Portionen nicht zu unterschiedlich sind und das Gewicht auf einer vorgedruckten Packung angegeben werden kann.

Zur Portionierung von Fleischstücken sind Schneidsysteme bekannt, die ein Fleischstück in Scheiben gleicher Dicke zerteilen. Als nachteilig erweist sich, daß diese Fleischscheiben nach dem Schneidvorgang gewogen und von Hand durch Abtrennen eines Teils auf das gewünschte Gewicht gebracht werden müssen. Dies ist einerseits sehr arbeitsaufwendig, zum anderen entsteht hierbei eine große Menge minderwertiger Abschnitte, die nicht weiterverwendet werden können und bis zu 35 % des ursprünglich zu zerteilenden Fleischstücks betragen.

Aus der Herstellung von panierten Fleischstücken und von Tiefkühlprodukten ist es bekannt, Fleisch exakt zu portionieren. Hierzu muß jedoch das Fleisch vorgefroren und unter sehr hohem Druck von bis zu 80 bar geformt werden, um anschließend je nach Gewicht in entsprechend dicke Scheiben geschnitten werden zu können. Als nachteilig erweist sich, daß derartige Vorrichtungen aufgrund der notwendigen tiefen Temperatur und des hohen Drucks teuer und aufwendig sind. Außerdem ist es bei der Portionierung von Frischfleisch, insbesondere wenn dieses anschließend zubereitet wird, nicht erwünscht, das Fleisch zunächst zu gefrieren.

Darüber hinaus ist bekannt, daß das Fleischstück zunächst optoelektronisch vermessen wird und ein Rechner anschließend anhand der ermittelten Daten und des jeweiligen spezifischen Gewichts des Fleischstückes die Schnittführung bestimmt. Die nach diesem Verfahren arbeitenden Vorrichtungen sind aufwendig und teuer. Je nach Exaktheit der vom Rechner bestimmten Schnittführung sind außerdem relativ hohe Gewichtstoleranzen in Kauf zu nehmen.

Außerdem ist aus dem Stand der Technik eine Vorrichtung zum Portionieren eines Fleischstücks mit einer Einlege- und Vorpresseinheit, einer Kalibiereinheit und einer Schneideinheit bekannt. Die Schneideinheit weist ein Schneidelement auf, welches zwischen der Einlege- und Vorpresseinheit und der Kalibiereinheit angeordnet ist. Das Gewicht wird über das Volumen bestimmt. Hierzu wird das Fleischstück in eine Einlege- und Vorpreßeinheit eingeführt und mit einem Druck von typischerweise 3 bis 4 bar zusammengepreßt. Frischfleisch läßt sich aufgrund seines hohen Wasseranteils und seiner anatomischen Zusammensetzung bis -4°C ohne Qualitätsnachteile verformen. Durch das Zusammenpressen nimmt das Fleischstück eine Form mit fest vorgegebenem Querschnitt an. Von der Einlegeund Vorpreßeinheit wird das Fleischstück in den Behälter einer Kalibriereinheit gepreßt, welcher die Dicke und das Volumen der einzelnen Scheiben vorgibt. Hierbei wird das Fleischstück so in einen Behälter der Kalibriereinheit gepreßt, daß es den Behälter vollständig ausfüllt. Der Querschnitt des Behälters der Kalibriereinheit entspricht dem Querschnitt der Einlege- und Vorpreßeinheit. Über den fest vorgegebenen Querschnitt und die fest vorgegebene Dicke ist das Volumen und, aufgrund der konstanten Dichte des Fleischstücks, das Gewicht der einzelnen Scheiben exakt bestimmt. Ein Wiegen der einzelnen Scheiben ist hierbei nicht notwendig. Mit Hilfe einer Schneideinheit wird der in die Kalibriereinheit gepreßte Teil des Fleischstücks vom übrigen Fleischstück abgetrennt. Diese Fleischscheibe wird anschließend aus der Kalibriereinheit ausgeworfen und nimmt seine natürliche Form wieder an. Der Schneidvorgang wird so oft wiederholt, bis das gesamte Fleischstück in exakt gleichgewichtige Scheiben aufgeteilt ist. Die Abweichung bezüglich des Gewichts der einzelnen Scheiben ist sehr gering. Als Abschnitt verbleibt lediglich die letzte Scheibe des Fleischstücks. Ein Tiefkühlen, Vermessen oder Verformen bei sehr hohen Drücken oder gar das nachträgliche Wiegen und Nachbehandeln ist bei der erfindungsgemäßen Vorrichtung nicht notwendig. Das Fleischstück kann auf schnelle und einfache Weise mit hoher Genauigkeit in Scheiben gleicher Dicke und gleichen Gewichts zerteilt werden, ohne daß hierbei eine große Menge nicht verwertbare Abschnittanteile entsteht.
Auf der dem Preßstempel abgewandten Stirnseite der Einlege- und Vorpreßeinheit ist die Kalibriereinheit angeordnet. Die Kalibriereinheit weist einen an einer Seite offenen Behälter auf, wobei die offene Seite in Form und Größe mit der offenen Stirnseite des Behälters der Einlege- und Vorpreßeinheit übereinstimmt. Außerdem gleicht der Behälter in seinem Querschnitt dem Behälter der Einlege- und Vorpreßeinheit und ist in seiner Tiefe auf die vorgegebene Dicke der Scheiben abgestimmt. Der Behälter kann zwei Stellungen einnehmen. In einer ersten Stellung ist er in Verlängerung des Behälters der Einlege- und Vorpreßeinheit angeordnet und ist mit seiner offenen Seite der offenen Seite des Behälters der Einlege- und Vorpreßeinheit zugewandt. In einer zweiten Stellung ist der Behälter oder Teile des Behälters der Kalibriereinheit von der Einlege- und Vorpreßeinheit weggeschwenkt oder verschoben und weist mit einer offenen Seite nach unten. Mit Hilfe einer Schwenkvorrichtung oder einer Schiebevorrichtung kann der Behälter von der ersten in die zweite Stellung und umgekehrt überführt werden. In der ersten Stellung in Verlängerung des Behälters der Einlege- und Vorpreßeinheit wird das zu portionierende Fleischstück in den Behälter der Kalibriereinheit eingepreßt. Nach dem Abtrennen der Scheibe von dem Fleischstück wird der Behälter in seine zweite Stellung überführt, in der die Scheibe ausgeworfen und abtransportiert wird.
Der Behälter der Kalibriereinheit bildet eine feste Einheit und ist als ganzes von der Einlege- und Vorpreßeinheit wegschwenkbar. Bei einer horizontal angeordneten Einlege- und Vorpreßeinheit ist dieser feste Behälter zum Abtransport der abgetrennten Scheibe so zu verschwenken, daß der Behälter mit seiner offenen Seite nach unten weist.

Demgegenüber hat die erfindungsgemäße Vorrichtung zum Portionieren eines Fleischstücks nach den Merkmalen des Anspruchs 1, die die Erfindung definieren, den Vorteil, dass der Behälter der Kalibriereinheit aus einer mit einer Öffnung versehenen Kalibrierplatte und einer an der Kalibrierplatte angeordneten Bodenplatte besteht. Dabei stimmt die Öffnung in ihrem Querschnitt mit dem Querschnitt der Einlege- und Vorpreßeinheit überein. Die Dicke der Kalibrierplatte entspricht der vorgegebenen Dicke der Scheiben. Die Kalibrierplatte ist zwischen der Schneideinheit und der Bodenplatte verschiebbar. Bei einer vertikal angeordneten Einlege- und Vorpreßeinheit kann die Kalibriereinheit auf der nach unten weisenden Stirnseite angeordnet sein. Zum Einpressen des Fleischstücks in den Behälter der Kalibriereinheit befindet sich die Öffnung der Kalibierplatte in Verlängerung der Einlege- und Vorpreßeinheit. Das Fleischstück wird durch den Preßstempel gegen die den Behälter der Kalibriereinheit verschließende Bodenplatte gedrückt. Nach dem Abtrennen der Scheibe durch das Schneidelement wird die das Fleischstück enthaltende Kalibrierplatte zwischen dem nun feststehenden Schneidelement und der feststehenden Bodenplatte so verschoben, daß die Öffnung der Kalibrierplatte von unten zugänglich ist. Aufgrund der Gravitationskraft fällt die Scheibe nach unten aus der Öffnung heraus. Dies kann durch einen von oben in die Öffnung eingreifenden Stempel unterstützt werden.

Nach einer vorteilhaften Ausgestaltung der Erfindung weist die Einlege- und Vorpreßeinheit einen länglichen Behälter zur Aufnahme des zu portionierenden Fleischstücks auf. An einer Stirnseite des Behälters ist ein in axialer Richtung verschiebbarer Preßstempel angeordnet. Auf der gegenüberliegenden Stirnseite ist der Behälter offen. Der Behälter ist hinsichtlich seines Querschnitts an das zu portionierende Fleischstück angepaßt. So sind beispielsweise für Filets und für Bratenstücke unterschiedliche Behälter zu verwenden. Mit Hilfe des Preßstempels wird das Fleischstück zusammengepreßt und füllt dabei das gesamte verbleibende Volumen des Behälters aus. An der offenen Stirnseite des Behälters schließen sich die Schneideinheit und die Kalibriereinheit der Vorrichtung an.

Nach einer weiteren vorteilhaften Ausgestaltung der Erfindung weist der Behälter auf einer in Längsrichtung verlaufenden Seite eine Öffnung auf, welche mit einem Deckel verschließbar ist. Auf diese Weise kann das zu portionierende Fleischstück bequem in den Behälter eingelegt werden.

Nach einer weiteren vorteilhaften Ausgestaltung der Erfindung weist die Schneidvorrichtung ein Schneidelement auf, welches in einer ersten Stellung zwischen dem Behälter der Einlege- und Vorpreßeinheit und dem Behälter der Kalibriereinheit angeordnet ist und den Behälter der Einlege- und Vorpreßeinheit auf dieser Seite vollständig verschließt. In einer zweiten Stellung gibt das Schneidelement die Stirnseite des Behälters der Einlege- und Vorpreßeinheit vollständig frei und erlaubt das Verschieben des Fleischstücks in den Behälter der Kalibriereinheit. Beim Übergang von der zweiten in die erste Stellung wird der in die Kalibriereinheit eingepreßte Teil des Fleischstücks vom übrigen Fleischstück abgetrennt. Da der Behälter der Einlege- und Vorpreßeinheit durch das Schneidelement in seiner ersten Stellung komplett verschlossen ist, kann das Fleischstück bereits während des Abtransports der Scheibe durch die Kalibriereinheit erneut mit Hilfe des Preßstempels zusammengepreßt werden, um beim Übergang des Schneidelements in seine zweite Stellung wieder in den Behälter der Kalibriereinheit eingepreßt zu werden. Dieser Vorgang wird so oft wiederholt, bis das gesamte Fleischstück in einzelne Scheiben aufgeteilt ist.

Nach einer weiteren vorteilhaften Ausgestaltung der Erfindung ist das Fleischstück in dem Behälter der Einlege- und Vorpreßeinheit mit einem Druck zwischen 3 und 4 bar zusammenpreßbar. Derartige Drücke sind ausreichend, um das Fleischstück in zuverlässiger Weise so vorzuformen, daß es das vorgegebene Volumen vollständig ausfüllt und sich keine Hohlräume bilden.

Nach einer weiteren vorteilhaften Ausgestaltung der Erfindung ist das Schneidelement ein Messer mit einer gegenüber der Bewegungsrichtung des Schneidelements schräg verlaufenden Schneide. Ein derartiges Messer trennt die Scheibe vom Fleischstück nach Art eines Fallbeils ab und vollzieht dabei einen ziehenden Schnitt. Derartige Messer haben gegenüber solchen Messern, die eine Sägebewegung ausführen, den Vorteil, daß das Fleisch nicht den periodischen Sägebewegungen folgt und beim Schneiden keine Totpunkte auftreten.

Nach einer weiteren vorteilhaften Ausgestaltung der Erfindung ist das Schneidelement ein Messer mit einer sichelförmigen Schneide, wobei das Messer um eine Achse schwenkbar oder drehbar angeordnet ist.

Nach einer weiteren vorteilhaften Ausgestaltung der Erfindung sind an der Schneideinheit mehrere Schneidelemente in axialer Richtung parallel zueinander angeordnet. Der Abstand je zweier Schneidelemente entspricht dabei der vorgegebenen Dicke der Scheiben. Auf diese Weise können gleichzeitig mehrere Scheiben von dem Fleischstück abgetrennt werden. Dadurch wird das Portionieren des Fleischstücks beschleunigt. Es können aber auch mehrere Einlege- und Vorpreßeinheiten und mehrere Kalibriereinheiten nebeneinander angeordnet sein. Das gemeinsame Schneidelement trennt dann bei einem Schneidevorgang gleich mehrere Scheiben von verschiedenen Fleischstücken ab

Nach einer weiteren vorteilhaften Ausgestaltung der Erfindung weist die der offenen Seite des Behälters der Kalibriereinheit gegenüberliegende Seite Ausnehmungen auf, an welche auf der Außenseite des Behälters Druckleitungen angeschlossen sind. Auf diese Weise läßt sich im Inneren des Behälters der Kalibriereinheit ein Unterdruck erzeugen, der dazu beiträgt, daß das Fleischstück das Volumen des Behälters vollständig ausfüllt. Beim Abtransport der abgetrennten Scheibe wird die Scheibe durch den Unterdruck zunächst in dem Behälter der Kalibriereinheit gehalten, bis der Behälter seine Endstellung über der Transporteinheit erreicht hat. Sobald der Behälter in dieser Endstellung angelangt ist, wird durch die Druckleitung in dem Behälter ein Überdruck erzeugt. Dieser unterstützt zum einen den Auswurf der Scheibe aus dem Behälter und verhindert zum anderen, daß Fleischreste in den Ausnehmungen verbleiben.

Nach einer weiteren vorteilhaften Ausgestaltung der Erfindung sind an der Kalibriereinheit außerhalb des Behälters Stempel verschiebbar angeordnet, welche in der zweiten Stellung des Behälter oder der Teile des Behälters in das Behälterinnere schiebbar sind. Diese Stempel unterstützen zusätzlich den Auswurf der abgetrennten Scheibe aus dem Behälter der Kalibriereinheit. Die Stempel können beispielsweise durch die Ausnehmungen im Behälter der Kalibriereinheit hindurchgreifen. In diesem Fall werden die Ausnehmungen durch die Stempel zusätzlich von Fleischresten gereinigt. Die Stempel können aber auch durch die Öffnung in der Kalibrierplatte hindurchgreifen.

Nach einer weiteren vorteilhaften Ausgestaltung der Erfindung ist die Tiefe des Behälters der Kalibriereinheit einstellbar. Auf diese Weise kann die vorgegebene Dicke und das Gewicht der Scheibe variiert werden.

Nach einer weiteren vorteilhaften Ausgestaltung der Erfindung ist eine Transportvorrichtung vorgesehen, auf der die Scheiben durch die Kalibriereinheit abgelegt werden können. Die Transportvorrichtung, beispielsweise ein Fließband, kann die portionierten Scheiben der Weiterverarbeitung zuführen.

Weitere Vorteile und vorteilhafte Ausgestaltungen der Erfindung sind der nachfolgenden Beschreibung, der Zeichnung und den Ansprüchen entnehmbar.

Ein Ausführungsbeispiel des Gegenstands der Erfindung ist in der Zeichnung dargestellt und im folgenden näher beschrieben. Es zeigen:
- Fig. 1: nicht-erfindungsgemäße Vorrichtung in einer Seitenansicht,
- Fig. 2: Teil der in Fig. 1 gezeigten Vorrichtung, wobei sich der Behälter der Kalibriereinheit in Verlängerung der Einlege- und Vorpreßeinheit befindet,
- Fig. 3: Teil der in Fig. 1 gezeigten Vorrichtung, wobei sich der Behälter der Kalibriereinheit in einer nach unten verschwenkten Position befindet,
- Fig. 4: Schneideinheit und Einlege- und Vorpreßeinheit in einer Ansicht in achsialer Richtung,
- Fig. 5: Behälter der Kalibriereinheit in einer Ansicht in achsialer Richtung,
- Fig. 6: Ausführungsbeispiel einer erfindungsgemäßen Vorrichtung in einer Seitenansicht
- Fig. 7: Vorrichtung gemäß Fig. 6 nach Abtrennen der Fleischscheibe.

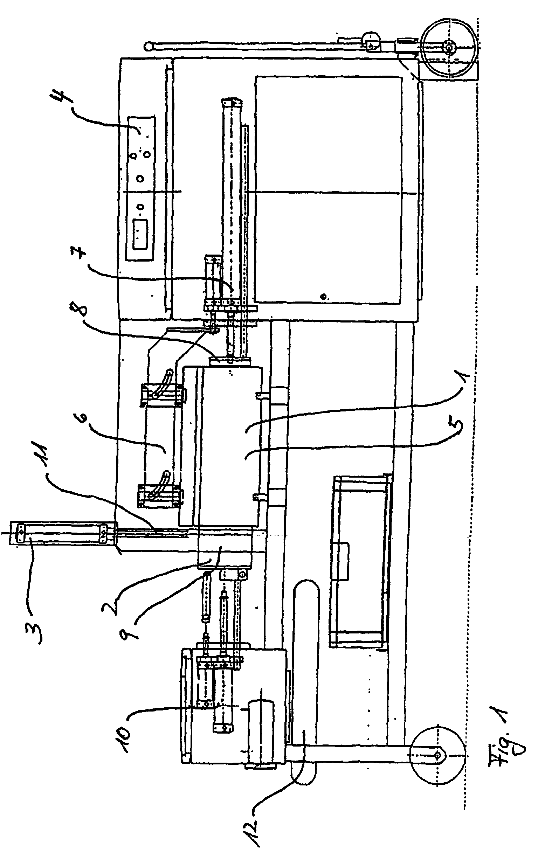

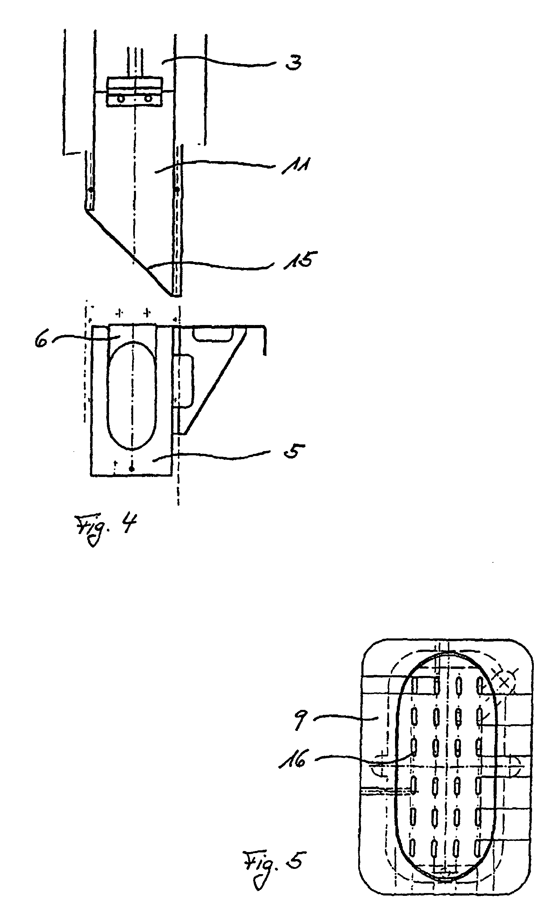

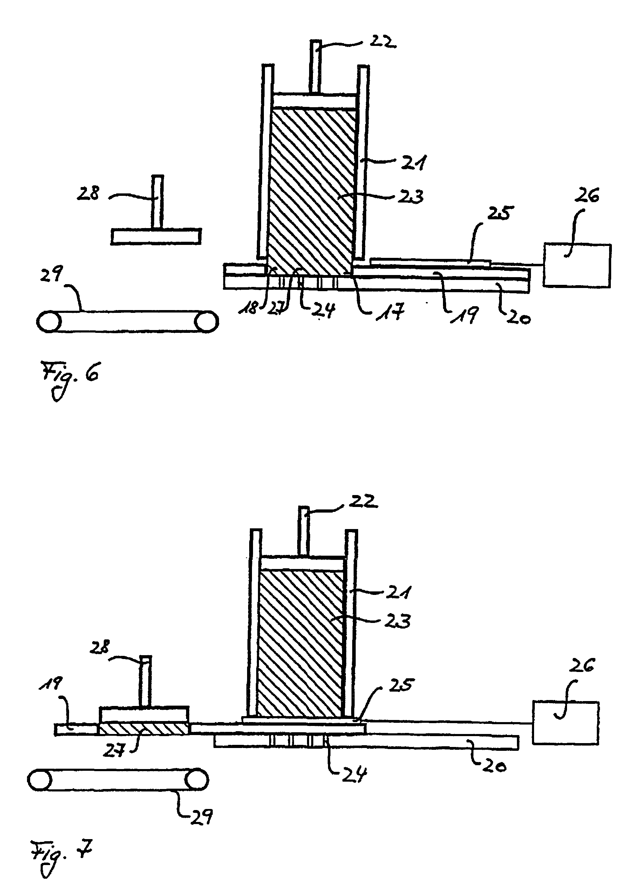

In Fig. 1 ist eine nicht-erfindungsgemäße Vorrichtung zum Portionieren eines Fleischstücks in einer Seitenansicht dargestellt, die einige Merkmale der erfindungsgemäßen Vorrichtung in Fig. 6 und 7 enthält. Die Vorrichtung besteht im wesentlichen aus einer Einlege- und Vorpreßeinheit 1, einer Kalibriereinheit 2 und einer Schneideinheit 3. Mittels einer Bedieneinrichtung 4 können die Parameter und die von der Vorrichtung durchzuführenden Schritte eingestellt werden. Die Einlege- und Vorpreßeinheit 1 besteht aus einem Behälter 5, einem den Behälter von oben verschließenden Deckel 6 und einem über einen Zylinder 7 betätigten Preßstempel 8. Der Preßstempel verschließt den Behälter 5 auf der rechten Stirnseite und wird zum Pressen des eingelegten Fleischstücks in axialer Richtung verschoben. Die Kalibriereinheit 2 besteht im wesentlichen aus einem Behälter 9 und einem den Behälter verschwenkenden Kipp- und Schwenkzylinder 10. Außerdem sind an den Behälter 9 Druckleitungen angeschlossen, welche jedoch in Fig. 1 nicht dargestellt sind. Die Schneideinheit 3 weist ein Schneidelement 11 auf, mit dem die Scheibe von dem Fleischstück abgetrennt wird. Mit Hilfe eines Transportbandes 12 werden die portionierten Fleischscheiben der weiteren Verarbeitung zugeführt.

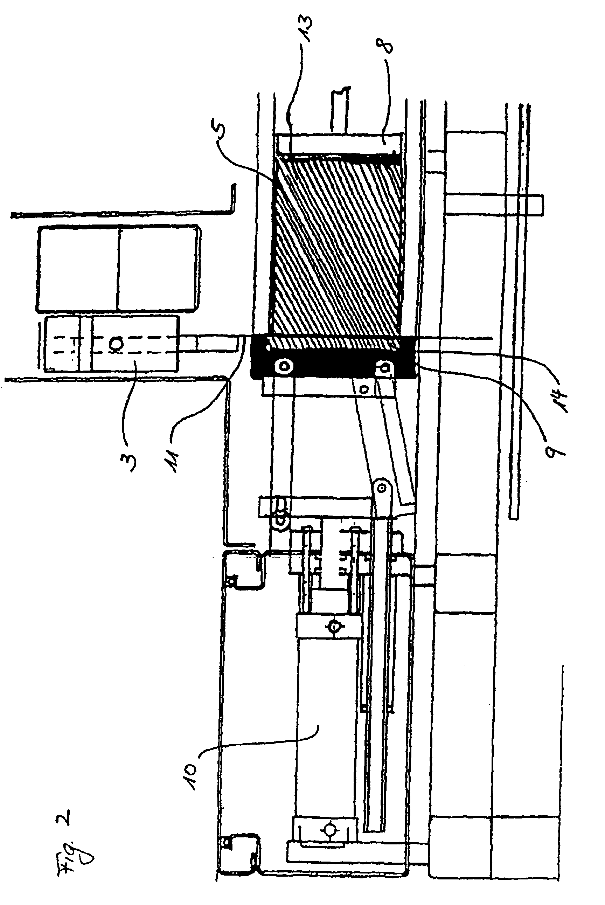

Fig. 2 zeigt einen Ausschnitt aus der Vorrichtung nach Fig. 1 in einer vereinfachten Darstellung. Ein schraffiert gezeichnetes Fleischstück 13 ist in dem Behälter 5 der Einlege- und Vorpreßeinheit 1 eingelegt und wird mit Hilfe des Preßstempels 8 gegen das Schneidelement 11 gepreßt. Das Schneidelement 11 hat soeben die Scheibe 14, welche in den Behälter 9 der Kalibriereinheit 2 eingepreßt ist, abgetrennt.

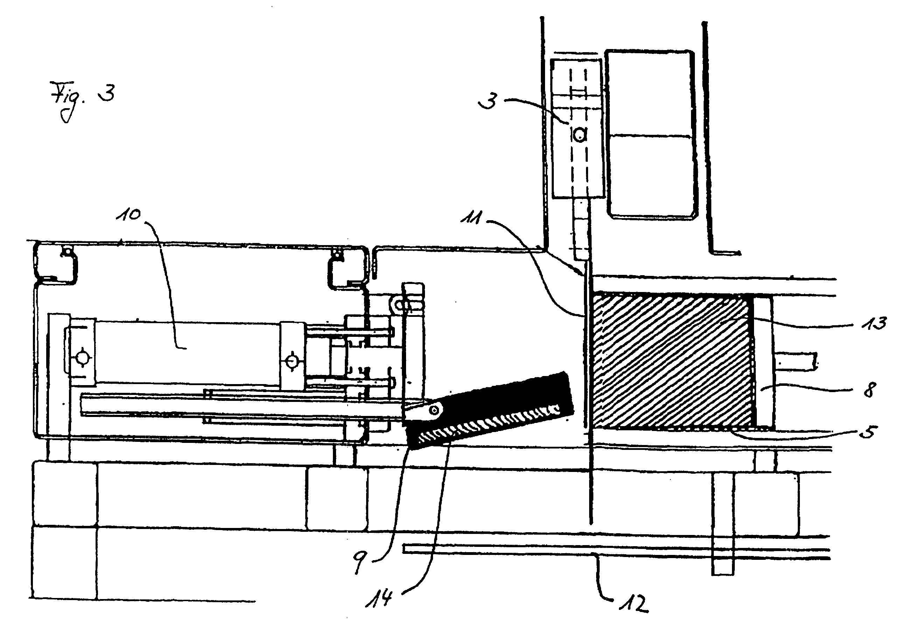

Als nächstes wird, wie in Fig. 3 dargestellt, der Behälter 9 der Kalibriereinheit 2 von der Einlege- und Vorpreßeinheit 1 nach unten weggeschwenkt, so daß die offene Seite des Behälters nach unten weist. Schließlich wird die Fleischscheibe aus dem Behälter 9 der Kalibriereinheit 2 ausgeworfen und auf einem Transportband 12 abgelegt.

In Fig. 4 ist die Schneideinheit und der Behälter der Einlege- und Vorpreßeinheit in einer Ansicht in axialer Richtung dargestellt. Der nach innen weisende Teil des Behälters 5 der Einlege- und Vorpreßeinheit 1 ist im unteren Bereich abgerundet. Der den Behälter 5 von oben verschließende Deckel 6 ist auf der dem Fleischstück zugewandten Seite ebenfalls abgerundet. Das Fleischstück wird somit in eine Form mit ovalem Querschnitt gepreßt. Das Schneidelement 11 der Schneideinheit 3 ist nach Art eines Fallbeils mit einer schräg verlaufenden Schneide 15 ausgestattet. Zum Abtrennen der Scheibe vom Fleischstück wird das Schneidelement 11 von oben nach unten abgesenkt und vollzieht dabei einen ziehenden Schnitt. In seiner unteren Endstellung deckt das Schneidelement 11 die ovale Öffnung an der Stirnseite des Behälters vollständig ab.

In Fig. 5 ist der der Einlege- und Vorpreßeinheit 1 zugewandte Teil der Kalibriereinheit 2 dargestellt. Der nach innen weisende Teil des Behälters 9 hat denselben ovalen Querschnitt wie der Innenraum des in Fig. 4 dargestellten Behälters 5 der Einlege- und Vorpreßeinheit 1. An der der Einlege- und Vorpreßeinheit abgewandten Seite des Behälters befinden sich zahlreiche ovale Ausnehmungen 16, durch die einerseits in der Zeichnung nicht erkennbar Stempel hindurchgreifen können, um den Auswurf der abgetrennten Fleischscheibe aus dem Behälter zu unterstützen. Außerdem können an diese Ausnehmungen auf der der Fleischscheibe abgewandten Seite Druckleitungen angeschlossen sein, über die sich im Behälter ein Unter- oder Überdruck erzeugen läßt. Bei einem Unterdruck wird die Fleischscheibe angesaugt und füllt dabei den gesamten Innenraum des Behälters aus. Der Überdruck unterstützt wiederum den Auswurf der Fleischscheibe aus dem Behälter.

In Fig 6 und 7 ist ein Ausführungsbeispiel einer erfindungsgemäßen Vorrichtung dargestellt. Der Behälter 17 der Kalibriereinheit besteht aus einer mit einer Öffnung 18 versehenen Kalibrierplatte 19 und einer Bodenplatte 20. Der Behälter 21 der Einlege- und Vorpreßeinheit verläuft vertikal oberhalb der Kalibriereinheit. Die Öffnung 18 weist denselben Querschnitt auf, wie der Behälter der Einlege- und Vorpreßeinheit. Der Preßstempel 22 preßt das Fleischstück 23 nach unten in den Behälter 17 der Kalibriereinheit. Die Bodenplatte weist Ausnehmungen 24 auf, an die in der Zeichnung nicht dargestellte Druckleitungen angeschlossen sind. Auf diese Weise wird in dem Behälter 17 ein Unterdruck erzeugt, welcher dazu beiträgt, daß das Fleischstück 23 den Behälter 17 vollständig ausfüllt. Nachdem das Fleischstück in den Behälter 17 eingepreßt wurde, wird das Schneidelement 25 durch den Zylinder 26 aus der in Fig. 6 dargestellten Position in die in Fig. 7 dargestellte Position bewegt und trennt dabei die im Behälter 17 der Kalibriereinheit befindliche Scheibe vom Fleischstück 23 ab. Anschließend wird die Kalibrierplatte 19 zur Seite hin verschoben und mithilfe eines Stempels die Fleischscheibe aus der Öffnung 18 der Kalibrierplatte herausgedrückt. Die Fleischscheibe fällt nach unten und wird von einem Transportband 29 der weiteren Bearbeitung zugeführt.

Die in Fig. 6 und 7 dargestellte Vorrichtung kann auch in mehrfacher Ausführung nebeneinander angeordnet sein. In diesem Fall ist nur ein Zylinder zum Bewegen der verschiedenen Schneidelemente notwendig. Mit einer derartigen Vorrichtung können mehrere Fleischstücke gleichzeitig portioniert werden.

### Bezugszahlenliste

- 1: Einlege- und Vorpreßeinheit
- 2: Kalibriereinheit
- 3: Schneideinheit
- 4: Bedieneinrichtung
- 5: Behälter der Einlege- und Vorpreßeinheit
- 6: Deckel
- 7: Zylinder
- 8: Preßstempel
- 9: Behälter der Kalibriereinheit
- 10: Kipp- und Schwenkzylinder
- 11: Schneidelement
- 12: Transportband
- 13: Fleischstück
- 14: Fleischscheibe
- 15: Schneide
- 16: Ausnehmungen
- 17: Behälter der Kalibriereinheit
- 18: Öffnung
- 19: Kalibriereinheit
- 20: Bodenplatte
- 21: Behälter der Einlege- und Vorpreßeinheit
- 22: Preßstempel
- 23: Fleischstück
- 24: Ausnehmungen
- 25: Schneidelement
- 26: Zylinder
- 27: Fleisch scheibe
- 28: Stempel
- 29: Transportband

## Patentansprüche

1. Vorrichtung zum Portionieren eines Fleischstücks in mehrere Scheiben (27) gleicher Dicke und gleichen Gewichts
mit einer Einlege- und Vorpreßeinheit (21, 22) zur Aufnahme und zum Zusammenpressen des Fleischstücks (23) und
mit einer Schneideinheit (25) zum Abtrennen von Fleischscheiben (27) vom Fleischstück (23),
wobei eine Kalibriereinheit (17, 18, 19, 20) zur Vorgabe der Dicke und des Volumens der einzelnen Scheiben (27) vorgesehen ist,
wobei die Schneideinheit (25) zwischen der Einlege- und Vorpreßeinheit (21, 22) und der Kalibriereinheit vorgesehen ist, und
wobei die Kalibriereinheit zum Abtransport der abgetrennten Fleischscheibe beweglich angeordnet ist,
**dadurch gekennzeichnet,**
**daß** der Behälter (17) der Kalibriereinheit aus einer mit einer Öffnung (18) versehenen Kalibrierplatte (19) und einer an der Kalibrierplatte angeordneten Bodenplatte (20) besteht, daß die Öffnung (18) in ihrem Querschnitt mit dem Querschnitt der Einlege- und Vorpreßeinheit übereinstimmt, daß die Dicke der Kalibrierplatte (19) mit der Dicke der Scheiben (27) übereinstimmt und daß die Kalibrierplatte (19) zwischen der Schneideinheit und der Bodenplatte (20) verschiebbar ist.

2. Vorrichtung zum Portionieren eines Fleischstücks nach Anspruch 1, **dadurch gekennzeichnet,**
**daß** die Einlege- und Vorpreßeinheit (21, 22) einen länglichen Behälter (21) zur Aufnahme des zu portionierenden Fleischstücks (23) aufweist,
**daß** die Einlege- und Vorpreßeinheit an einer Stirnseite des Behälters (21) einen in achsialer Richtung verschiebbaren Preßstempel (22) aufweist, und
**daß** der Behälter an der dem Preßstempel (22) gegenüberliegenden Stirnseite offen ist.

3. Vorrichtung zum Portionieren eines Fleischstücks nach Anspruch 2, **dadurch gekennzeichnet, daß** der Behälter (21) auf einer in Längsrichtung verlaufenden Seite eine Öffnung aufweist, welche mit einem Deckel verschließbar ist.

4. Vorrichtung zum Portionieren eines Fleischstücks nach einem der vorhergehenden Ansprüche, **dadurch gekennzeichnet, daß** die Schneideinheit (25) ein Schneidelement (25) aufweist, welches in einer ersten Stellung zwischen dem Behälter (21) der Einlege- und Vorpreßeinheit (21, 22) und dem Behälter (17) der Kalibriereinheit (17, 18, 19, 20) angeordnet ist und den Behälter (21) der Einlege- und Vorpreßeinheit auf dieser Stirnseite vollständig verschließt, und welches in einer zweiten Stellung die Stirnseite des Behälters (21) der Einlege- und Vorpreßeinheit vollständig freigibt und das Verschieben des Fleischstücks (23) bis in den Behälter (17) der Kalibriereinheit erlaubt.

5. Vorrichtung zum Portionieren eines Fleischstücks nach einem der vorhergehenden Ansprüche, **dadurch gekennzeichnet, daß** das Fleischstück (23) in dem Behälter (21) der Einlege- und Vorpreßeinheit (21, 22) mit einem Druck zwischen 3 und 4 bar zusammenpreßbar ist.

6. Vorrichtung zum Portionieren eines Fleischstücks nach Anspruch 4 oder 5, **dadurch gekennzeichnet, daß** das Schneidelement (25) ein Messer mit einer gegenüber der Bewegungsrichtung des Schneidelements schräg verlaufenden Schneide ist.

7. Vorrichtung zum Portionieren eines Fleischstücks nach Anspruch 4 oder 5, **dadurch gekennzeichnet, daß** das Schneidelement ein Messer mit einer sichelförmigen Schneide ist, und daß das Messer um eine Achse schwenkbar oder drehbar angeordnet ist.

8. Vorrichtung zum Portionieren eines Fleischstücks nach einem der vorhergehenden Ansprüche, **dadurch gekennzeichnet, daß** die der offenen Seite des Behälters (9) der Kalibriereinheit (17, 18, 19, 20) gegenüberliegende Seite Ausnehmungen (24) aufweist, und daß an diese Ausnehmungen auf der Außenseite des Behälters Druckleitungen angeschlossen sind.

9. Vorrichtung zum Portionieren eines Fleischstücks nach Anspruch 7, **dadurch gekennzeichnet, daß** über die Druckleitungen an den Ausnehmungen sowohl Unterdruck als auch Überdruck erzeugbar ist.

10. Vorrichtung zum Portionieren eines Fleischstücks nach einem der vorhergehenden Ansprüche, **dadurch gekennzeichnet, daß** an der Kalibriereinheit außerhalb des Behälters (17) der Kalibriereinheit Stempel (28) verschiebbar angeordnet sind, und daß die Stempel (28) in der zweiten Stellung des Behälters (17) oder der Teile des Behälters in das Behälterinnere schiebbar sind.

11. Vorrichtung zum Portionieren eines Fleischstücks nach einem der vorhergehenden Ansprüche, **dadurch gekennzeichnet, daß** eine Transportvorrichtung (29) vorgesehen ist, auf der die Scheiben durch die Kalibriereinheit (17, 18, 19, 20) ablegbar sind.

## Claims

1. An apparatus for portioning a piece of meat into a plurality of slices having the same thickness and the same weight,
comprising a loading and pre-pressing unit (21, 22) for receiving and squeezing a piece of meat (23) and a cutting unit (25) for separating slices of meat (27) from the piece of meat (23),
wherein a calibrating unit (17, 18, 19, 20) for determining the thickness and the volume of the single slices (27) is provided, said cutting unit (25) being provided between the loading and pre-pressing unit (21, 22) and the calibrating unit,
wherein the calibrating unit is arranged movably for taking away the separated slice of meat, **characterized in that** the container (17) of said calibrating unit consists of a calibrating plate (19) provided with an opening (18) and a bottom plate (20) arranged on said calibrating plate, that said opening (18) has the same section as the section of said loading and pre-pressing unit, that the calibrating plate (19) has the same thickness as the thickness of the slices (27) and that said calibrating plate (19) is displaceable between sald cutting unit and said bottom plate (20).

2. The apparatus for portioning a piece of meat according to claim 1, **characterized in** the said loading and pre-pressing unit (21, 22) comprises an elongated container (21) for receiving the piece of meat (23) to be portioned,
that said loading and pre-pressing unit comprises a pressuring die (22) on an end surface of said container (21), said pressuring die (22) being displaceable in the axial direction and
that said container is open at the end surface opposite to the pressuring die (22).

3. The apparatus for portioning a piece of meat according to claim 2, **characterized in that** said container (21) comprises an opening on a side extending in the longitudinal direction, said opening being closable with a lid.

4. The apparatus for portioning a piece of meat according to one of the preceding claims, **characterized in that** said cutting unit (25) comprises a cutting member (25) arranged between said container (21) of said loading and pre-pressing unit (21, 22) and said container (17) of said calibrating unit (17, 18, 19, 20) in a first position and completely closing said container (21) of said loading and pre-pressing unit on said end surface and completely exposing said end surface of said container (21) of said loading and pre-pressing unit in a second position and allowing the displacement of said piece of meat (23) up to said container (17) of said calibrating unit.

5. The apparatus for portioning a piece of meat according to one of the preceding claims, **characterized in that** said piece of meat (23) can be squeezed in said container (21) of said loading and pre-pressing unit (21, 22) by a pressure lying between 3 and 4 bar.

6. The apparatus for portioning a piece of meat according to claim 4 or 5, **characterized in that** said cutting member (25) is a knife with a cutting edge extending obliquely with respect to the moving direction of the cutting member.

7. The apparatus for portioning a piece of meat according to claim 4 or 5, **characterized in that** said cutting member is a knife with a lunated cutting edge and that said knife is arranged slewingly or rotatably around an axis.

8. The apparatus for portioning a piece of meat according to one of the preceding claims, **characterized in that** the side opposite to the open side of said container (9) of said calibrating unit (17, 18, 19, 20) comprises recesses (24) and that on the outer side of said container pressure pipes are connected to said recesses.

9. The apparatus for portioning a piece of meat according to claim 8, **characterized in that** at said recesses both a negative pressure and an over-pressure can be generated via said pressure pipes.

10. The apparatus for portioning a piece of meat according to one of the preceding claims, **characterized in that** dies (28) are arranged displaceable on said calibrating unit outside of said container (17) of said calibrating unit and that said dies (28) can be pushed into said container in the second position of said container (17) or of parts of said container.

11. The apparatus for portioning a piece of meat according to one of the preceding claims, **characterized in that** a transporting device (29) is provided onto which said slices can be loaded by said calibrating unit (17, 18, 19, 20).

## Revendications

1. Dispositif pour fractionner un morceau de viande en plusieurs tranches (27) de même épaisseur et de même poids équipé d'une unité d'insertion et de précompression (21, 22) pour loger et comprimer le morceau de viande (23) et d'une unité de coupe (25) pour séparer des tranches (27) de viande du morceau de viande (23), une unité de calibrage (17, 18, 19, 20) étant prévue pour prédéfinir l'épaisseur et le volume des différentes tranches (27), l'unité de coupe (25) étant prévue entre l'unité d'insertion et de précompression (21, 22) et l'unité de calibrage, l'unité de calibrage est disposée de manière mouvante pour l'évacuation de la tranche de viande séparée, **caractérisé en ce que** le récipient (17) de l'unité de calibrage comprend une plaque de calibrage (19) pourvue d'une ouverture (18) et une plaque de fond (20) disposée sur la plaque de calibrage, **en ce que** l'ouverture (18) correspond dans sa section à la section de l'unité d'insertion et de précompression, **en ce que** l'épaisseur de la plaque de calibrage (19) correspond à l'épaisseur des tranches (27) et **en ce que** la plaque de calibrage (19) peut coulisser entre l'unité de coupe et la plaque de fond (20).

2. Dispositif pour fractionner un morceau de viande selon la revendication 1, **caractérisé en ce que** l'unité d'insertion et de précompression (21, 22) présente un récipient (21) allongé pour recevoir le morceau de viande (23) à fractionner, **en ce que** l'unité d'insertion et de précompression présente un piston de presse (22) pouvant coulisser dans le sens axial sur une face frontale du récipient (21) et en ce le récipient est ouvert sur la face frontale opposée au piston de presse (22).

3. Dispositif pour fractionner un morceau de viande selon la revendication 2, **caractérisé en ce que** le récipient (21) présente une ouverture sur un côté allant dans le sens longitudinal qui peut être fermé avec un couvercle.

4. Dispositif pour fractionner un morceau de viande selon l'une quelconque des revendications précédentes, **caractérisé en ce que** l'unité de coupe (25) présente un élément de coupe (25), qui est disposé dans une première position entre le récipient (21) de l'unité d'insertion et de précompression (21, 22) et le récipient (17) de l'unité de calibrage (17, 18, 19, 20) et ferme complètement le récipient (21) de l'unité d'insertion et de précompression sur cette face frontale, et qui libère complètement dans une deuxième position la face frontale du récipient (21) de l'unité d'insertion et de précompression et permet le coulissement du morceau de viande (23) jusque dans le récipient (17) de l'unité de calibrage.

5. Dispositif pour fractionner un morceau de viande selon l'une quelconque des revendications précédentes, **caractérisé en ce que** le morceau de viande (23) peut être compressé dans le récipient (21) de l'unité d'insertion et de précompression (21, 22) avec une pression comprise entre 3 et 4 bars.

6. Dispositif pour fractionner un morceau de viande selon la revendication 4 ou 5, **caractérisé en ce que** l'élément de coupe est un couteau avec une lame disposée de façon inclinée par rapport au sens de déplacement de l'élément de coupe.

7. Dispositif pour fractionner un morceau de viande selon la revendication 4 ou 5, **caractérisé en ce que** l'élément de coupe est un couteau avec une lame en forme de croissant et **en ce que** le couteau est disposé de façon basculante ou pivotante autour d'un axe.

8. Dispositif pour fractionner un morceau de viande selon l'une quelconque des revendications précédentes, **caractérisé en ce que** le côté opposé au côté ouvert du récipient (9) de l'unité de calibrage (17, 18, 19, 20) présente des évidements (24) et **en ce que** des conduites sous pression sont raccordées à ces évidements sur le côté extérieur du récipient.

9. Dispositif pour fractionner un morceau de viande selon la revendication 8, **caractérisé en ce qu'**on peut générer une dépression ainsi qu'une surpression par les conduites sous pression sur les évidements.

10. Dispositif pour fractionner un morceau de viande selon l'une quelconque des revendications précédentes, **caractérisé en ce que** des pistons (28) sont disposés de façon coulissante sur l'unité de calibrage à l'extérieur du récipient (17) de l'unité de calibrage et **en ce que** les pistons (28) peuvent être poussés à l'intérieur du récipient dans la deuxième position du récipient (17) ou des parties du récipient.

11. Dispositif pour fractionner un morceau de viande selon l'une quelconque des revendications précédentes, **caractérisé en ce qu'**il est prévu un dispositif de transport (29) sur lequel les tranches peuvent être déposées par l'unité de calibrage (17, 18, 19, 20).
